# FASCICULE DE BREVET EUROPEEN

(11) **EP 1 153 728 B1**
(45) Date de publication et mention de la délivrance du brevet: **27.07.2005**
(21) Numéro de dépôt: 01420104.0
(22) Date de dépôt: 09.05.2001
(51) Int. Cl.: B29C 49/24, B29C 51/16

(54) **Procédé d'obtention d'un emballage en matériau synthétique thermo-plastique, comportant une surface imprimée**
Verfahren zum herstellen eines Kunststoffbehälter mit bedruckten Fläche
Method for producing a thermo plastic container with a printed surface portion

(30) Priorité: 12.05.2000 FR 0006096
(43) Date de publication de la demande: 14.11.2001
(73) Titulaire: Etablissement " Plastic-Lax", 39220 Bois D'Amont (FR)
(72) Inventeur: Gruet, Eddy, 39150 Saint-Pierre (FR); Caire, Jean-Luc, 39300 Cize (FR)
(74) Mandataire: Guerre, Dominique

(56) Documents cités:
- FR-A- 2 614 576
- FR-A- 2 676 966
- US-A- 4 289 817
- US-A- 5 948 490
- US-A- 6 001 208

## Description

La présente invention concerne l'emballage, en particulier de produits alimentaires, avec tout élément ou composant obtenu par transformation d'un matériau synthétique thermo-plastique.

Plus précisément, l'invention s'intéresse aux emballages, tels que boîtes, bouteilles, flacons ou autres récipients ou contenants, comportant une paroi en matériau synthétique thermo-plastique, par exemple en polypropylène, dont la face de présentation du côté extérieur comporte un décor prédéterminé.

Par « élément d'emballage », on entend aussi bien la totalité de l'emballage considéré, qu'une partie creuse, par exemple un pot ou barquette, et/ou une partie plate, par exemple un couvercle.

Par « décor », on entend de manière générique tout marquage supportant une ou plusieurs informations, par exemple d'utilisation du produit emballé, d'identification dudit produit ou du producteur, et/ou d'ornement.

Dans le domaine de l'emballage plastique de produits de grande consommation, la présence du décor tel que précédemment défini est très importante, car contribuant à plusieurs fonctions, notamment :
- identification et description du produit,
- informations d'utilisation dudit produit, notamment inscriptions obligatoires légalement,
- mise en évidence des avantages et bénéfices apportés par ledit produit.

C'est pourquoi un tel décor doit être le plus riche, le plus complet et le plus attractif.

Malheureusement, s'agissant de produits de grande consommation, par exemple alimentaires, le mode d'apposition, d'obtention, ou reproduction dudit décor doit être le moins coûteux possible en termes de production industrielle.

S'agissant de l'obtention ou de l'apposition d'un décor sur la face de présentation d'un emballage en matériau thermo-plastique, différentes techniques sont aujourd'hui exploitées, parmi lesquelles on peut par exemple distinguer :
1/ l'impression d'une feuille thermo-plastique, puis sa mise en forme pour obtenir l'élément d'emballage ;
2/ l'obtention du décor concomitamment avec la fabrication ou mise en forme de l'élément d'emballage ;
3/ la reprise de l'élément d'emballage, pour obtenir un décor prédéterminé, postérieurement à la fabrication ou mise en forme dudit élément d'emballage.

Selon la première technique, on imprime une feuille thermo-plastique, laquelle est ensuite thermo-formée pour obtenir l'élément d'emballage fini portant l'impression déformée.

Si une telle technique permet d'obtenir un décor sur une face de présentation ayant une surface non développable, le décor finalement obtenu est obligatoirement la déformée d'un décor horizontal ou à plat, ce qui limite les possibilités de cette technique. Cette dernière nécessite souvent des machines capables de repérer le ou les décors, et est relativement délicate à maîtriser.

La seconde technique appelée « in mold labelling » ou IML, consiste à déposer une étiquette dans le moule de transformation du matériau thermo-plastique, et à surmouler ce dernier sur l'étiquette, par injection, ou thermo-formage, ou extrusion-soufflage.

Si cette technique apporte une qualité de décoration supérieure à toute impression, elle nécessite néanmoins que la surface décorée soit développable, ce qui limite son application à certains éléments d'emballage.

La troisième technique consiste, d'une manière ou d'une autre, à rapporter un décor prédéterminé, en reprise, sur l'élément d'emballage fini. A cette fin, aujourd'hui, au moins cinq solutions peuvent être considérées, à savoir :
1/ l'impression offset,
2/ le manchonnage de l'élément d'emballage,
3/ la tampographie,
4/ la sérigraphie,
5/ l'impression par transfert, notamment à chaud.

La première solution consiste dans le cas présent à déposer une ou plusieurs encres sur des clichés respectivement différents, portant chacun une partie du motif, à regrouper lesdites parties sur un blanchet et à transférer le décor complet, sur la surface imprimable de l'élément d'emballage.

Cette solution nécessite que la surface à imprimer soit développable, ou quasi-développable, ce qui limite son exploitation à un élément d'emballage plat ou creux, obtenu par thermo-formage ou injection.

La seconde solution consiste à déposer une gaine en matière plastique thermo-rétractable, imprimée avec un décor prédéterminé, sur l'élément d'emballage à décorer, puis à rétracter la gaine sur ledit élément, par apport de chaleur.

Si cette solution permet d'apporter un décor sur une surface non développable, elle nécessite néanmoins une accroche mécanique pour le manchon, ce qui limite les possibilités de formes de l'élément d'emballage. Elle permet de décorer uniquement le pourtour de l'élément d'emballage, et cette technique demeure limitée aux éléments creux d'emballage.

La troisième solution consiste à encrer un tampon portant un relief (en positif ou en négatif) représentant le décor à obtenir, à presser le tampon sur la surface à imprimer, et ce à plat ou de manière rotative.

Si une telle solution permet de décorer des surfaces non développables, la qualité de décoration est assez pauvre. Cette solution est de toute façon particulièrement coûteuse, en tampographie rotative.

La quatrième solution consiste à transférer de l'encre à travers une grille portant une partie du décor à obtenir, par exemple une partie de ce dernier par couleur.

Une telle solution permet une qualité de décoration limitée ; et les cadences de production demeurent faibles.

La cinquième solution consiste en une décalcomanie du décor prédéterminé, avec ou sans apport de chaleur.

Une telle solution permet de décorer des surfaces non développables, mais les formes pouvant être ainsi imprimées sont limitées.

FR-A-2 614 576 décrit un procédé d'obtention d'un élément d'emballage comportant une paroi en matériau synthétique thermoplastique, laquelle comprend du côté extérieur, une surface décorée non développable revêtue d'un décor prédéterminé, et respectivement une face intérieure opposée ou la face de présentation. Selon ce procédé, à partir du matériau thermoplastique, à l'état fondu ou ramolli, et de la surface décorée, on forme une ébauche de l'élément d'emballage, comportant une paroi incorporant la surface décorée avec sa face de présentation orienté vers l'extérieur et on chaufe les récipients sur un mandrin de forme.

Au terme de cet inventaire de l'état de la technique, il n'existe pas aujourd'hui de procédé entièrement satisfaisant, permettant de reproduire ou apposer un décor prédéterminé sur toute face de présentation, ayant généralement ou localement une surface non développable, d'un élément d'emballage comportant une paroi mince en matériau synthétique thermo-plastique. Et tel est l'objet de la présente invention.

La présente invention concerne donc un procédé selon la revendication 1 d'obtention d'un élément dur d'emballage comportant une paroi en matériau synthétique thermo-plastique, laquelle comprend du côté extérieur ou intérieur un insert en feuille mince, ledit insert comprenant une face de présentation, comportant une surface décorée non développable revêtue d'un décor prédéterminé, et respectivement une face intérieure ou extérieure, opposée.

Selon la présente invention,
a) à partir du décor, on obtient par rétro-déformation un décor rétreint, en passant de l'état non développable de la surface décorée à l'état développable à plat de la même surface décorable,
b) on reproduit le décor rétreint à plat sur la surface décorable de l'insert en feuille mince,
c) à partir du matériau thermo-plastique, et de l'insert sur lequel le décor rétreint est reproduit, par injection et/ou déformation d'une paraison ou d'une feuille constituée par ledit matériau thermo-plastique à l'état fondu ou ramolli, sur ledit insert, on forme une ébauche de l'élément d'emballage, comportant une paroi incorporant l'insert avec sa face de présentation du côté extérieur ou orienté vers l'extérieur,
d) on déforme l'ébauche ramollie avec l'insert pour déformer ladite surface de son état développable à son état non développable, et obtenir après refroidissement l'élément d'emballage décoré.

Selon le rendu désiré pour l'élément d'emballage décoré, le décor rétreint est obtenu par exemple par rétro-déformation, notamment anamorphose, du décor prédéterminé ou désiré, en fonction de la déformation de la surface décorée, lors de l'étape b), pour passer de l'état développable à l'état non développable.

La présente invention est maintenant décrite par référence au dessin annexé, dans lequel les figures 1 à 6 représentent les différentes étapes, avec vues en coupe, du procédé selon l'invention :
Plus précisément :
   - la figure 1 représente, de manière schématique et en vue de dessus, un insert ayant une forme rétreinte, dont une surface imprimable ou décorable est imprimée ou décorée à plat avec un motif ou dessin rétreint ;
   - la figure 2 représente, de manière schématique une ébauche de l'élément d'emballage, tel qu'obtenu après injection d'un matériau synthétique thermo-plastique, et/ou déformation, par exemple par soufflage, d'une paraison ou d'une feuille, constituée par ledit matériau thermo-plastique, cette injection et/ou déformation étant effectuée sur l'insert rétreint et imprimé selon figure 1, lui-même disposé et maintenu dans le moule servant à la transformation du matériau thermo-plastique ramolli ;
   - la figure 3 représente une vue en coupe et par moitié, selon la ligne II.II de la figure 2, de l'ébauche représentée à la figure 2 ;
   - la figure 4 représente schématiquement le mode de déformation, par exemple par soufflage, de l'ébauche selon figures 2 et 3, à l'état ramolli ;
   - la figure 5 représente, de manière schématique l'élément d'emballage, tel qu'obtenu au terme de la mise en oeuvre du procédé selon l'invention ;
   - la figure 6 représente, en coupe et par moitié, selon la ligne de coupe VI.VI de la figure 5, l'élément d'emballage représenté à la figure 5 ;
   - la figure 7 représente, en vue agrandie, un détail repéré sur la figure 6.

Il s'agit d'obtenir un élément d'emballage 1, par exemple un contenant du type pot ou barquette, comportant une paroi 2 en matériau synthétique thermo-plastique, laquelle comprend du côté extérieur une face 2a de présentation exhibant un décor 4 prédéterminé.

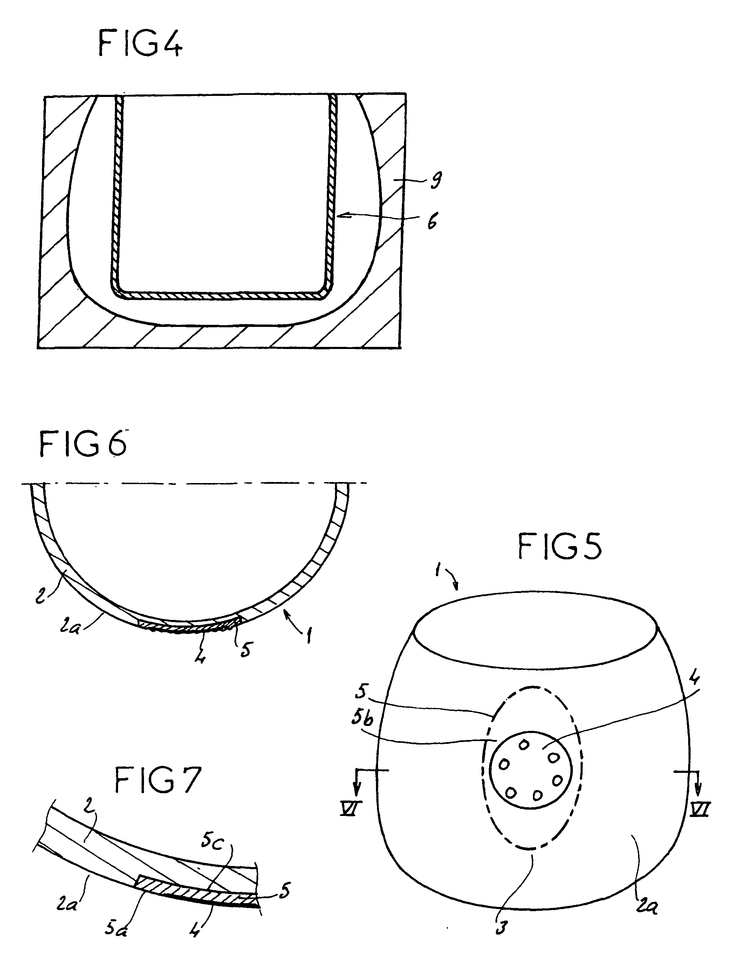

Comme représenté aux figures 5 et 6, au terme de la mise en oeuvre du procédé selon l'invention, la paroi 2 comprend du côté extérieur un insert 5, consistant en une feuille mince, par exemple une étiquette ; et cet insert 5 comprend lui-même une face de présentation 5a comportant une surface imprimée 5b non développable, revêtue du décor prédéterminé, tandis que la face intérieure opposée 5c est revêtue par le matériau thermo-plastique de la paroi 2 de manière à obtenir une adhérence consécutive à une micro-fusion du matériau thermo-plastique.

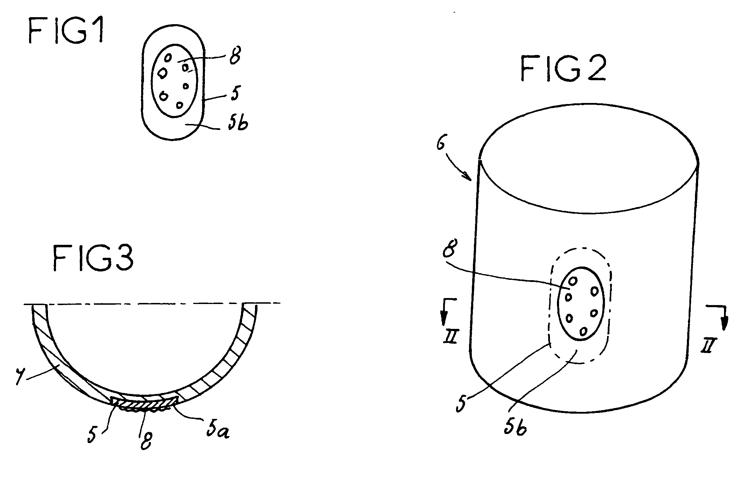

Selon l'invention :
a) par exemple sous forme de cliché d'impression, on dispose d'un décor 8 rétreint, en positif ou en négatif, obtenu par exemple et si nécessaire par rétro-déformation, par exemple anamorphose, du décor prédéterminé 4, en fonction de la déformation de la surface décorée 5b dont il sera question ci-après lors de l'étape d) de déformation, faisant passer ladite surface décorée de l'état développable à l'état non développable,
b) on imprime le décor rétreint 8, à plat, sur une surface imprimable décorable 5b, développable, appartenant à la face de présentation 5a de l'insert 5 rétreint ; on aboutit ainsi à l'insert imprimé ou décoré représenté à la figure 1 ; dans certains cas, un vernis ou un film transparent de protection peut être déposé sur la décoration portée par l'insert 5,
c) à partir du matériau thermo-plastique, à l'état fondu ou ramolli, et de l'insert 5 imprimé ou décoré selon figure 7, on forme une ébauche 6 de l'élément d'emballage, comportant une paroi 7 incorporant l'insert imprimé 5, avec sa face de présentation 5a, et par conséquent sa surface 5b, du côté extérieur; on aboutit, à l'état refroidi, à l'ébauche selon figures 2 et 3,
d) on porte le matériau thermo-plastique de l'ébauche décorée à l'état ramolli,
e) on déforme l'ébauche ramollie 6, avec l'insert 5 imprimé, pour obtenir, après refroidissement du matériau thermo-plastique, l'élément d'emballage 1 représenté aux figures 5 à 7 ; cette déformation est obtenue par exemple dans le moule 9 approprié, comme représenté à la figure 4.

S'agissant de la reproduction du décor rétreint 8, différentes techniques connues en elles-mêmes peuvent être considérées, en particulier les techniques traditionnelles par offset à sec ou humide.

Par exemple, avec une impression en cinq couleurs par offset, des rouleaux encreurs déposent l'encre d'une couleur sur les reliefs d'un cliché. Chaque cliché dépose à son tour son encre sur une face en caoutchouc (blanchet), qui recueille donc l'ensemble des couleurs, reconstituant ainsi la totalité du décor 4 prédéterminé, en couleurs. Le « blanchet » dépose ensuite l'ensemble du décor, sur la surface à imprimer de l'ébauche. Puis l'ébauche ainsi imprimée, passe ensuite dans un four afin de sécher ou polymériser l'encre. Une telle technique implique la rotation des porte-clichés et du porte-blanchet, lesquels sont cylindriques.

Une telle technique d'impression est compatible avec la surface imprimable 5b de l'ébauche, en particulier puisque ladite surface, une fois développée, est une surface plane ou quasi-plane.

L'insert 5 est par exemple une étiquette, et son impression peut être réalisée par des procédés classiques du type offset, flexographie, héliographie ou jet d'encres.

Selon une variante non représentée du procédé selon l'invention, on peut également disposer l'insert 5 sur la face intérieure de la paroi 2, avec la face de présentation 5a orientée vers l'extérieur de l'emballage. La face de présentation 5a vient alors se positionner contre la face intérieure de la paroi 2. Cette variante s'applique bien sûr lorsque le matériau thermoplastique constitutif de la paroi 2 est transparent. L'insert 5 ou l'étiquette correspondante est ainsi visible par transparence. La face de présentation 5a est alors revêtue par le matériau thermoplastique. La face intérieure opposée 5c peut également être revêtue d'un matériau thermoplastique sous forme de couche ou de feuille.

## Revendications

1. Procédé d'obtention d'un élément d'emballage (1) comportant une paroi (2) en matériau synthétique thermo-plastique, laquelle comprend du côté extérieur ou intérieur un insert (5) en feuille mince, ledit insert comprenant une face de présentation (5a), comportant une surface décorée (5b) non développable revêtue d'un décor (4) prédéterminé, et respectivement une face intérieure ou extérieure, opposée (5c), procédé selon lequel :
a) à partir du décor (4), on obtient par rétro-déformation un décor (8) rétreint, en passant de l'état non développable de la surface décorée (5b) à l'état développable à plat de la même surface (5b) décorable,
b) on reproduit le décor rétreint (8) à plat sur la surface décorable (5b) de l'insert (5) en feuille mince,
c) à partir du matériau thermo-plastique, et de l'insert (5) sur lequel le décor rétreint (8) est reproduit, par injection et/ou déformation d'une paraison ou d'une feuille constituée par ledit matériau thermo-plastique à l'état fondu ou ramolli, sur ledit insert (5), on forme une ébauche (6) de l'élément d'emballage, comportant une paroi (7) incorporant l'insert (5) avec sa face de présentation (5a) du côté extérieur ou orienté vers l'extérieur,
d) on déforme l'ébauche ramollie (6) avec l'insert (5) pour déformer ladite surface de son état développable à son état non développable, et obtenir après refroidissement l'élément d'emballage décorée.

## Patentansprüche

1. Verfahren zum Erhalt eines Verpackungselementes (1), das eine Wandung (2) aus thermoplastischem synthetischen Material aufweist, die an der Außen- oder Innenseite einen Einsatz (5) einer dünnen Platte aufweist, wobei der Einsatz eine Präsentierfläche (5a) aufweist, die eine dekorierte, nichtabwickelbare Oberfläche (5b) aufweist, die mit einem bestimmten Dekor (4) bedeckt ist, und eine innere bzw. äußere gegenüberliegende Seite (5c) aufweist, wobei gemäß dem Verfahren:
a) ausgehend von dem Dekor (4) durch Rückformung ein Schrumpfdekor (8) erhalten wird, indem von dem nicht-abwickelbaren Zustand der dekorierten Oberfläche (5b) in den flachen abwickelbaren Zustand derselben dekorierbaren Oberfläche (5b) übergegangen wird,
b) der flache Schrumpfdekor (8) auf der dekorierbaren Oberfläche (5b) des Einsatzes (5) der dünnen Platte reproduziert wird,
c) ausgehend von dem thermoplastischen Material und dem Einsatz (5), auf dem der Schrumpfdekor (8) reproduziert ist, durch Injektion und/oder Verformung eines Verformlings oder einer Platte, die aus dem thermoplastischen Material in geschmolzenem oder weichem Zustand gebildet ist, auf dem Einsatz (5) ein Rohling (6) des Verpackungselementes geformt wird, der eine Wandung (7) aufweist, die den Einsatz (5) mit dessen Präsentierfläche (5a) auf der Außenseite oder nach außen orientiert beinhaltet,
d) der weiche Rohling (6) mit dem Einsatz (5) verformt wird, um die Oberfläche von seinem abwickelbaren Zustand in seinen nicht-abwickelbaren Zustand zu verformen, und um nach dem Abkühlen das dekorierte Verpackungselement zu erhalten.

## Claims

1. A process for obtaining a packaging element (1) comprising a wall (2) of synthetic thermoplastic material, which comprises, on the outer or inner side, a thin-film insert (5), said insert comprising a display face (5a), comprising a non-developable decorated surface (5b) covered with a predetermined decoration (4), and an opposing, respectively inner or outer face (5c), according to which process:
a) taking as basis the decoration (4), there is obtained by back-forming a shrunk decoration (8), passing from the non-developable state of the decorated surface (5b) to the flat-developable state of the same decoratable surface (5b),
b) the shrunk decoration (8) is reproduced flat on the decoratable surface (5b) of the thin-film insert (5),
c) taking as basis the thermoplastic material, and the insert (5) on which the shrunk decoration (8) is reproduced, by injection and/or deformation of a preform or a film consisting of said thermoplastic material in the molten or softened state, on said insert (5), a blank (6) of the packaging element is formed comprising a wall (7) incorporating the insert (5) with its display face (5a) on the outer side or oriented outwards,
d) the softened blank (6) with the insert (5) is deformed to deform said surface from its developable state to its non-developable state, and to obtain after cooling the decorated packaging element.
